# FASCICULE DE BREVET EUROPEEN

(11) **EP 3 499 242 B1**
(45) Date de publication et mention de la délivrance du brevet: **05.08.2020**
(21) Numéro de dépôt: 18209874.9
(22) Date de dépôt: 03.12.2018
(51) Int. Cl.: G01N 35/10, B01D 15/18, G01N 30/08, G01N 1/40

(54) **UNITÉ D'EXTRACTION ET SYSTÈME D'ANALYSE D'UN ÉCHANTILLON LIQUIDE EMPLOYANT LADITE UNITÉ D'EXTRACTION**
EXTRAKTIONSEINHEIT UND ANALYSESYSTEM EINER FLÜSSIGEN PROBE UNTER EINSATZ DIESER EXTRAKTIONSEINHEIT
EXTRACTION UNIT AND SYSTEM FOR ANALYSING A LIQUID SAMPLE USING SAID EXTRACTION UNIT

(30) Priorité: 12.12.2017 FR 1761981
(43) Date de publication de la demande: 19.06.2019
(73) Titulaire: Commissariat à l'Énergie Atomique et aux Énergies Alternatives, 75015 Paris (FR)
(72) Inventeur: RICOUL, Florence, 38950 QUAIX EN CHARTREUSE (FR); FAIN, Bruno, 38100 GRENOBLE (FR); PELISSON, Roland, 38660 LA TERRASSE (FR)
(74) Mandataire: GIE Innovation Competence Group

(56) Documents cités:
- WO-A1-2017/009304
- FR-A1- 2 988 620
- US-A- 5 720 798

## Description

### Domaine technique de l'invention

La présente invention se rapporte à une unité d'extraction employée dans un système d'analyse d'un échantillon liquide et à un système d'analyse complet intégrant ladite unité d'extraction.

### Etat de la technique

Dans la présente demande, on entend par "analytes", des composés organiques présents dans une matrice liquide.

Pour analyser des analytes contenus dans un échantillon liquide, il est connu d'effectuer au préalable une extraction de ces analytes de la phase liquide et une concentration afin de diminuer les limites de détection dans le dispositif d'analyse.

Une fois l'extraction et la concentration réalisées, les analytes sont injectés en phase gazeuse dans un dispositif d'analyse utilisant notamment une colonne de chromatographie en phase gazeuse.

Pour extraire et concentrer les analytes, il est connu d'utiliser un dispositif d'extraction appelé également "préconcentrateur". Ce dispositif fonctionne selon des techniques appelées SPME (pour "Solid-Phase Micro-Extraction") ou SBSE (pour "Stir-Bar Solid-Phase-Extraction"). Ces solutions utilisent des fibres ou barreaux qui présentent une phase adsorbante permettant de capturer une espèce chimique lorsqu'elle est imprégnée de l'échantillon liquide. Après une étape de séchage des fibres à l'aide d'un gaz, une étape de désorption par chauffage permet de libérer l'espèce chimique capturée, sous une forme gazeuse. Celle-ci est alors injectée dans une colonne de chromatographie en phase gazeuse du dispositif d'analyse, pour analyse des espèces présentes.

La demande de brevet WO2013/144330A1 décrit un tel système d'analyse. Le maintien en phase gazeuse des analytes d'intérêt impose de maintenir tous les éléments qui sont en contact avec le gaz à une température suffisamment élevée. Cette température est par exemple comprise entre 100°C et 250°C. Dans le système décrit dans ce document, ces éléments à maintenir à température suffisante, sont notamment le réseau fluidique employé, c'est-à-dire les tuyaux ou capillaires et les vannes. Or, de par leur géométrie, leur volume, leur inertie thermique, il s'avère difficile de chauffer ces éléments à la température souhaitée et de les maintenir à cette température. Il en résulte la présence de points froids, diminuant drastiquement la sensibilité du système. Par ailleurs, pour maintenir une telle température, le système consomme une énergie non négligeable.

La demande de brevet CN204314264Udécrit également un système d'analyse du même type que celui décrit ci-dessus. Ce document propose une solution pouvant permettre de s'affranchir des contraintes thermiques exposées ci-dessus. Pour cela, l'unité d'analyse ne dispose pas de vannes ou autres éléments de ce type entre le préconcentrateur et le dispositif d'analyse, évitant la création potentielle de points froids lors de la désorption des analytes. Par ailleurs, ce système repose sur la gravité pour assurer que du liquide ne rentre pas dans le dispositif d'analyse.

Dans le système précédent, le dispositif d'injection de l'échantillon liquide, formé d'une pompe à piston, et le dispositif d'injection de gaz permettant de sécher et de pousser les analytes sous forme gazeuse vers le dispositif d'analyse, sont ainsi connectés au préconcentrateur sur un même point de connexion.

Ces deux dispositifs sont donc susceptibles de générer un flux (liquide et/ou gazeux) à travers le préconcentrateur dans le même sens en direction du dispositif d'analyse au cours des différentes étapes de l'extraction et de l'analyse. Il en ressort que, selon la phase de fonctionnement, le dispositif d'analyse est susceptible d'être perturbé par des flux liquides ou gazeux entrants.

D'autres dispositifs sont aussi connus des documents US5720798A et WO2017/009304A1.

Le but de l'invention est donc de proposer une unité d'extraction comprenant un dispositif d'extraction, qui puisse résoudre les inconvénients des solutions antérieures exposés ci-dessus. La solution de l'invention ne repose notamment pas sur un principe de gravité.

### Exposé de l'invention

Ce but est atteint par une unité d'extraction employée dans un système d'analyse d'un échantillon liquide comprenant :
- Un dispositif d'extraction comprenant au moins une zone d'extraction d'au moins un analyte contenu dans ledit échantillon liquide et un dispositif d'analyse en phase gazeuse desdits analytes,
- Ladite unité d'extraction comportant trois points de connexion, dits premier point de connexion, deuxième point de connexion et troisième point de connexion,
- Ledit premier point de connexion étant agencé pour être relié à une première entrée fluidique destinée à recevoir un flux liquide entrant provenant de l'échantillon liquide,
- Ledit deuxième point de connexion étant agencé pour être relié à une deuxième entrée fluidique destinée à être connectée à une première source de gaz à injecter pour injecter un flux de gaz entrant,
- Ledit troisième point de connexion étant agencé pour être relié à un dispositif d'analyse,
- Ladite unité d'extraction comportant un canal principal reliant ledit premier point de connexion audit deuxième point de connexion à travers ledit dispositif d'extraction, un canal secondaire connecté au canal principal pour relier directement le troisième point de connexion audit premier point de connexion et audit dispositif d'extraction, et un T fluidique destiné à réaliser la jonction du canal secondaire sur le canal principal,
- Le canal secondaire présente une résistance hydraulique supérieure à celle du canal principal.

On peut noter que, dans le document US572098A cité ci-dessus, le dispositif n'est pas employé pour traiter un flux liquide. Les contraintes de fonctionnement ne sont donc pas identiques à celles de l'invention. Le document WO2017/009304A1 propose pour sa part de séparer deux phases liquides et non de traiter un échantillon liquide. De même les contraintes de fonctionnement ne peuvent donc être considérées comme identiques à celles de l'invention.

Selon une particularité, ladite unité d'extraction comporte un T fluidique destiné à réaliser une jonction du canal secondaire sur le canal principal.

Selon une autre particularité, l'unité d'extraction comporte un système de chauffage agencé pour chauffer ledit canal principal et ledit canal secondaire.

L'invention concerne également un système d'analyse comprenant :
- Une première entrée fluidique destinée à recevoir un échantillon liquide à analyser ;
- Des moyens d'injection dudit échantillon liquide ;
- Une deuxième entrée fluidique destinée à recevoir un gaz ;
- Un dispositif d'analyse ;
- Des premiers moyens de commutation fluidique agencés sur ladite première entrée fluidique et des deuxièmes moyens de commutation fluidique agencés sur ladite deuxième entrée fluidique (IN2) ;
- Une unité d'extraction telle que définie ci-dessus, dont ledit premier point de connexion est relié à ladite première entrée fluidique via lesdites premiers moyens de commutation fluidique, ledit deuxième point de connexion est relié à ladite deuxième entrée fluidique via lesdits deuxièmes moyens de commutation fluidique et ledit troisième point de connexion est relié directement audit dispositif d'analyse, c'est-à-dire sans vanne intermédiaire.

Selon une autre particularité, les premiers moyens de commutation fluidique comportent une première vanne fluidique à deux voies, agencée entre ledit premier point de connexion de l'unité d'extraction et ladite première entrée fluidique.

Selon une autre particularité, le système comporte une sortie fluidique, dite première sortie fluidique, agencée en parallèle de la première entrée fluidique et lesdits premiers moyens de commutation fluidique comportent une deuxième vanne fluidique à trois voies, agencée pour sélectionner la liaison du premier point de connexion de l'unité d'extraction, soit avec ladite première entrée fluidique, soit avec ladite première sortie fluidique.

Selon une autre particularité, le système comporte un réservoir connecté sur ladite première entrée fluidique et destiné à recevoir l'échantillon liquide à analyser.

Selon une autre particularité, le système comporte un réservoir de collecte, connecté sur ladite première sortie fluidique.

Selon une autre particularité, le système comporte une sortie fluidique, dite deuxième sortie fluidique, agencée en parallèle de la deuxième entrée fluidique et lesdits deuxièmes moyens de commutation fluidique comportent une vanne fluidique à trois voies, agencée pour sélectionner la liaison du deuxième point de connexion de l'unité d'extraction soit avec ladite deuxième entrée fluidique, soit avec ladite deuxième sortie fluidique.

Selon une autre particularité, le système comporte un système de pompage connecté sur ladite deuxième sortie fluidique.

Selon une autre particularité, le système comporte une source de gaz connectée sur ladite deuxième entrée fluidique.

Selon une autre particularité, le système comporte une troisième entrée fluidique connectée audit dispositif d'analyse.

Selon une autre particularité, le système comporte un évent et des troisièmes moyens de commutation fluidique agencés pour relier ledit dispositif d'analyse audit évent ou à ladite troisième entrée fluidique.

L'invention concerne également un procédé d'analyse d'un échantillon liquide, mis en oeuvre à l'aide du système tel que défini ci-dessus, ledit procédé comportant les étapes suivantes :
- Injection de l'échantillon fluidique par la première entrée fluidique de manière à créer un flux liquide à travers ledit premier point de connexion, via le canal principal jusqu'à ladite zone d'extraction,
- Injection d'un gaz par ladite deuxième entrée fluidique pour créer un flux gazeux à travers ledit deuxième point de connexion, via ledit canal principal jusqu'à la ladite zone d'extraction,
- Chauffage de ladite zone d'extraction pour désorber des analytes présents dans la zone d'extraction,
- Injection d'un gaz par ladite deuxième entrée fluidique pour créer un deuxième flux gazeux porteur à travers ledit deuxième point de connexion et amener lesdits analytes désorbés vers le dispositif d'analyse à travers le canal principal et le canal secondaire.

### Brève description des figures

D'autres caractéristiques et avantages vont apparaître dans la description détaillée qui suit faite en regard des dessins annexés dans lesquels :
- La figure 1 représente l'unité d'extraction conforme à l'invention ;
- Les figures 2A à 2E représentent, selon plusieurs variantes de réalisation, le système d'analyse de l'invention incorporant l'unité d'extraction de la figure 1 ;
- Les figures 3A à 3C illustrent les étapes d'une analyse d'un échantillon liquide, mises en œuvre à l'aide du système d'analyse de l'invention ;

### Description détaillée d'au moins un mode de réalisation

Dans la suite de la description, les canaux fluidiques employés dans le système sont par exemple des tuyaux tels que des capillaires présentant un diamètre de quelques centaines de µm, par exemple compris entre 50µm et 500µm. Bien entendu, toute autre solution pourrait être envisagée telle qu'un réseau fluidique gravé sur un substrat en silicium. Dans la suite de la description, nous pourrons parler de réseau fluidique pour évoquer les canaux employés pour relier les différents éléments du système. Les capillaires employés pourront présenter un diamètre interne de 250µm et un diamètre externe de 360µm.

Dans la suite de la description, les termes "connecté", "relié" ou termes équivalents sont à comprendre comme exprimant une liaison fluidique via un canal, tuyau (par exemple de type capillaire) ou équivalent.

Dans la suite de la description, les termes "amont" et "aval" sont à comprendre en considérant le sens du flux fluidique (gaz ou liquide) dans le réseau considéré.

Dans la suite de la description, on entend par vanne ouverte, une vanne qui autorise le passage d'un flux fluidique (liquide et/ou gaz) et par vanne fermée, une vanne qui n'autorise pas le passage d'un flux fluidique.

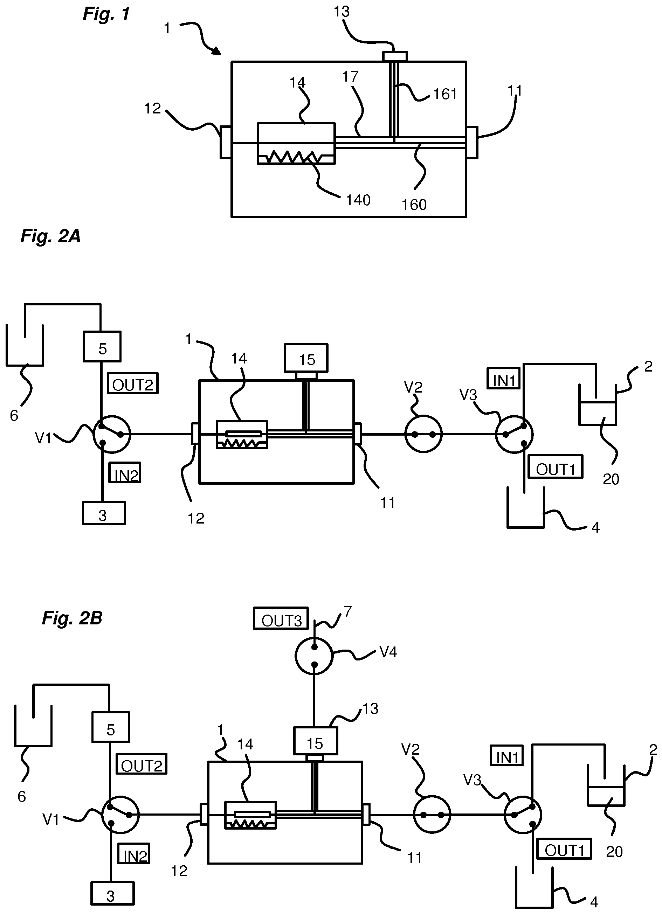

En référence à la figure 1, l'unité d'extraction 1 comporte un dispositif d'extraction 14, appelé également préconcentrateur. L'unité d'extraction définit une zone délimitée par un espace interne d'une enceinte. Cette enceinte pourra être fermée. Le dispositif d'analyse 15 décrit ci-dessous et notamment la colonne de chromatographie en phase gazeuse peut être placée dans ladite enceinte.

Le dispositif d'extraction 14 est destiné à adsorber des analytes d'intérêts présents dans un échantillon liquide. Le dispositif d'extraction comporte un boîtier dans lequel est formée une zone d'extraction comprenant des microstructures tels que des micro-piliers ou micro-colonnes permettant de capturer les analytes. Les microstructures peuvent être espacées les unes des autres d'une distance allant de 5µm à 50µm, avantageusement comprise entre 10µm et 30µm.

Le dispositif d'extraction comporte également une phase adsorbante recouvrant la surface de la zone d'extraction. Cette phase adsorbante peut être composée de polymères liquides ou poreux, tels que le PDMS (polydiméthylsiloxane), le Tenax, DVB, Carboxen, de nanotubes de carbone, de charbon actif, de silicium poreux. Le dépôt est réalisé à très faible épaisseur (quelques centaines de nm à quelques µm).

De manière non limitative, le dispositif d'extraction peut comporter une puce en silicium et verre de dimensions égales à 30x12 mm2 dotée d'un champ de micro-piliers carrés de 17µm de côté et espacés de 10µm les uns des autres.

D'autres particularités relatives à la zone d'extraction sont décrites dans la demande de brevet WO2013/144330A1**.**

Selon un aspect particulier de l'invention, l'unité d'extraction comporte principalement trois points de connexion, dits premier point de connexion 11, deuxième point de connexion 12 et troisième point de connexion 13. Chaque point de connexion est destiné à recevoir un flux fluidique entrant et/ou sortant selon l'étape mise en œuvre au cours d'une analyse.

L'unité d'analyse 1 peut comporter un canal principal 160 reliant son premier point de connexion à son deuxième point de connexion, en passant à travers le dispositif d'extraction 14.

L'unité d'extraction 1 peut comporter un canal secondaire 161 connecté au canal principal 160 et formant un T fluidique avec celui-ci pour relier le troisième point de connexion 13 au canal principal. Ce canal secondaire 161 est agencé de manière à relier directement le troisième point de connexion 13 au premier point de connexion 11 et au dispositif d'extraction 14, sans aucune vanne intermédiaire. Le rapport de résistance hydraulique au niveau du T fluidique est réglé de manière à limiter l'entrée de gaz lors de l'étape de séchage (voir ci-après), tout en assurant un transfert du flux gazeux vers le troisième point de connexion lors de l'étape de désorption (voir ci-après). La résistance hydraulique du canal secondaire 161 est ainsi supérieure à celle du canal principal 160.

Par définition, pour un canal de section circulaire, sa résistance hydraulique vaut Rh = 8^{∗}n^{∗}L/(π^{∗}R)^4 (η étant la viscosité du fluide, L la longueur du tube, R son rayon)).

Le rapport de résistance hydraulique entre les deux canaux peut être compris entre 500 et 1500, préférentiellement compris entre 800 et 1200. De manière non limitative, le canal secondaire 160 peut présenter un diamètre interne de 250µm et le canal principal un diamètre interne de 1,6mm.

De manière non limitative, le T fluidique peut être réalisé en verre ou en inox.

Le dispositif d'extraction 14 peut comporter son propre système de chauffage 140 commandé pour chauffer sa zone d'extraction de manière à assurer la désorption des analytes.

L'unité d'extraction 1 peut comporter un système de chauffage 17 pour chauffer au moins les canaux (principal et secondaire) de type capillaires employés dans l'unité d'extraction. Il peut également chauffer l'ensemble de l'espace interne de l'enceinte pour le placer à une température homogène. Ce système peut par exemple comporter des fibres de carbone enroulées autour des canaux. Ces fibres auront avantageusement la double fonction de chauffage et de mesure de la température (via une mesure de résistance électrique). Une unité de commande (non représentée) permettra de réguler le système de chauffage à la température de consigne souhaitée. Les capillaires pourront être chauffés jusqu'à une température de 200°C fin de favoriser le transport de flux gazeux et d'éviter les points froids sur le réseau fluidique présent dans l'unité d'extraction.

Le système de chauffage 17 peut également être employé pour chauffer un dispositif d'analyse 15 employé pour analyser les analytes désorbés.

Le système d'analyse peut comporter une source d'alimentation électrique pour alimenter les systèmes de chauffage employés.

Les trois points de connexion 11, 12, 13 devront présenter une structure adaptée aux différents flux qui les traversent. Le premier point de connexion 11 et le deuxième point de connexion 12 sont chacun destinés à être traversés par un flux liquide FL et un flux gazeux (FG1 ou FG2) lors d'une séquence d'analyse. Pour le premier point de connexion 11, il s'agit d'un flux liquide FL entrant et d'un flux gazeux sortant. Pour le deuxième point de connexion, il s'agit d'un flux liquide FL sortant et d'un flux gazeux entrant. On comprend ainsi que l'unité d'analyse 1 est traversé par des flux dans les deux sens, selon l'étape de la séquence en cours d'exécution. Pour le troisième point de connexion 13, il s'agit d'un flux gazeux destiné à se diriger vers un dispositif d'analyse 15.

L'unité d'extraction 1 peut être intégrée dans un système d'analyse.

Le système d'analyse peut se présenter selon différentes variantes de réalisation, dont certaines seront détaillées ci-dessous.

Le système d'analyse comporte une première entrée fluidique IN1 par laquelle peut être introduit l'échantillon liquide 20 à analyser, de manière à former un flux liquide FL dans le réseau du système.

Le système d'analyse peut comporter un réservoir 2 dans lequel vient se placer l'échantillon fluidique et auquel est connecté la première entrée fluidique.

La première entrée fluidique IN1 est destinée à être connectée au premier point de connexion 11 de l'unité d'extraction, via un canal fluidique.

Le système d'analyse comporte une deuxième entrée fluidique IN2 par laquelle peut être introduit un flux gazeux FG1.

Le système d'analyse peut comporter une source de gaz 3 sur laquelle vient se connecter ladite deuxième entrée fluidique IN2.

De manière non limitative, le gaz peut être de l'hélium, de l'air, de l'azote ou de l'hydrogène.

Le système d'analyse peut comporter une première sortie fluidique OUT1.

Le système d'analyse peut comporter un premier réservoir 4 de collecte, connecté sur ladite première sortie fluidique OUT1.

Le système d'analyse peut comporter une deuxième sortie fluidique OUT2.

Le système d'analyse peut comporter un système de pompage 5 destiné à aspirer l'échantillon liquide 20 présent dans le réservoir 2 vers l'intérieur de l'unité d'extraction 1, plus précisément dans le dispositif d'extraction 14. En plaçant le système de pompage en aval par rapport à l'unité d'extraction 1, les analytes d'intérêt présents dans l'échantillon liquide 20 n'auront aucun contact avec le système de pompage 5, puisqu'ils seront adsorbés préalablement dans le dispositif d'extraction 14.

Le système de pompage 5 est avantageusement connecté sur ladite deuxième sortie fluidique OUT2 et permet de générer le flux liquide FL entrant.

Le système peut comporter un deuxième réservoir de collecte 6 relié en sortie du système de pompage 5 pour recueillir tout liquide aspiré par le système de pompage 5.

En variante ou en complément du système de pompage 5, le système d'analyse peut comporter un système d'application d'une pression sur l'échantillon liquide 20 afin de l'injecter dans l'unité d'extraction 1 et de créer directement le flux liquide FL. Ce système est par exemple une seringue ou solution équivalente, connectée sur ladite première entrée fluidique IN1.

Le système d'analyse peut également comporter un dispositif d'analyse 15. Ce dispositif d'analyse 15 peut comporter une colonne de chromatographie en phase gazeuse. Le dispositif d'analyse 15 peut comporter un détecteur connecté en sortie de la colonne de chromatographie pour détecter les analytes présents, séparés grâce à la colonne en phase gazeuse. De manière non limitative, la colonne peut être une colonne capillaire de diamètre interne égal à 250µm, présentant une phase stationnaire de 250nm d'épaisseur et de type OV1. La colonne peut présenter une longueur totale comprise entre 2m et 10m. Le détecteur peut être de type FID (pour Détecteur à Ionisation de Flamme). Toute autre solution de détection peut bien entendu être employée.

Le dispositif d'analyse est connecté au troisième point de connexion 13 de l'unité d'extraction 1.

Le système d'analyse peut comporter une troisième sortie fluidique OUT3, connectée au dispositif d'analyse 15.

Un évent 7 peut être réalisé sur la troisième sortie fluidique OUT3 pour évacuer les gaz du dispositif d'analyse 15.

Le système d'analyse peut comporter une troisième entrée fluidique IN3 connectée au dispositif d'analyse 15.

Le système d'analyse peut comporter une deuxième source de gaz 8 (qui peut être identique à la première source de gaz) connectée sur ladite troisième entrée fluidique IN3. Grâce à cette troisième entrée fluidique, il est ainsi possible d'injecter du gaz dans le canal secondaire 161, de réaliser une contre-pression au niveau du T fluidique et ainsi d'éviter toute bifurcation du flux liquide FL vers le dispositif d'analyse 15 lorsque celui-ci est injecté dans le dispositif d'extraction par le canal principal 160.

De manière non limitative, le gaz issu de la deuxième source de gaz 8 peut être de l'hélium, de l'air, de l'azote ou de l'hydrogène.

Des moyens de commutation sont prévus pour sélectionner la liaison du dispositif d'analyse 15 entre la troisième entrée fluidique IN3 et la troisième sortie fluidique OUT3.

Le système d'analyse comprend un système de commutation comportant des vannes fluidiques permettant de connecter l'unité d'extraction 1 de manière adaptée aux différents autres dispositifs ou systèmes, en vue d'assurer les différentes étapes du procédé.

Le système de commutation comporte des premiers moyens de commutation agencés entre ladite deuxième sortie fluidique OUT2, ladite deuxième entrée fluidique IN2 d'injection et le deuxième point de connexion 12 de l'unité d'extraction 1.

Ces premiers moyens de commutation peuvent comporter une première vanne fluidique V1 trois voies.

Cette première vanne fluidique V1 est configurée pour connecter ledit deuxième point de connexion 12 de l'unité d'extraction 1, soit vers la deuxième sortie fluidique OUT2, soit vers la deuxième entrée fluidique IN2.

Le système de commutation comporte des deuxièmes moyens de commutation agencés entre la première entrée fluidique IN1 et le premier point de connexion 11 de l'unité d'extraction 1.

Ces deuxièmes moyens de commutation peuvent comporter une deuxième vanne fluidique V2 deux voies pour assurer ou interrompre la liaison entre la première entrée fluidique IN1 et le premier point de connexion 11.

Les deuxièmes moyens de commutation peuvent comporter une troisième vanne fluidique V3 à trois voies, agencée pour commander la liaison du premier point de connexion 11 de l'unité d'extraction avec ladite première entrée fluidique IN1 ou ladite première sortie fluidique OUT1.

Dans les deuxièmes moyens de commutation, la deuxième vanne fluidique V2 et la troisième vanne fluidique V3 peuvent être intervertis par rapport au premier point de connexion 11 de l'unité d'extraction 1. Autrement dit, le premier point de connexion 11 peut être relié directement à la deuxième vanne fluidique V2 ou directement à la troisième vanne fluidique V3.

Le système de commutation peut comporter des troisièmes moyens de commutation optionnels agencés entre le dispositif d'analyse 15, l'évent 7 formant la troisième sortie fluidique OUT3 et la troisième entrée fluidique IN3, reliée à la source de gaz 8.

Ces troisièmes moyens de commutation peuvent comporter une quatrième vanne fluidique V4 de type trois voies. Elle est agencée pour relier le dispositif d'analyse 15, soit à l'évent 7, soit à la troisième entrée fluidique IN3.

Le système d'analyse peut comporter les moyens de commande des différentes vannes fluidiques. Ces moyens de commande peuvent être automatisés. Ils peuvent comporter un automate programmable destiné à exécuter une séquence de commande pour réaliser l'analyse. En déroulant la séquence, l'automate programmable commande chaque vanne fluidique de manière adaptée pour dérouler l'étape en cours.

En variante, de réalisation, la commande pourra également être réalisée manuellement.

A titre d'exemple et de manière non limitative, les vannes fluidiques sont des micro-électrovannes.

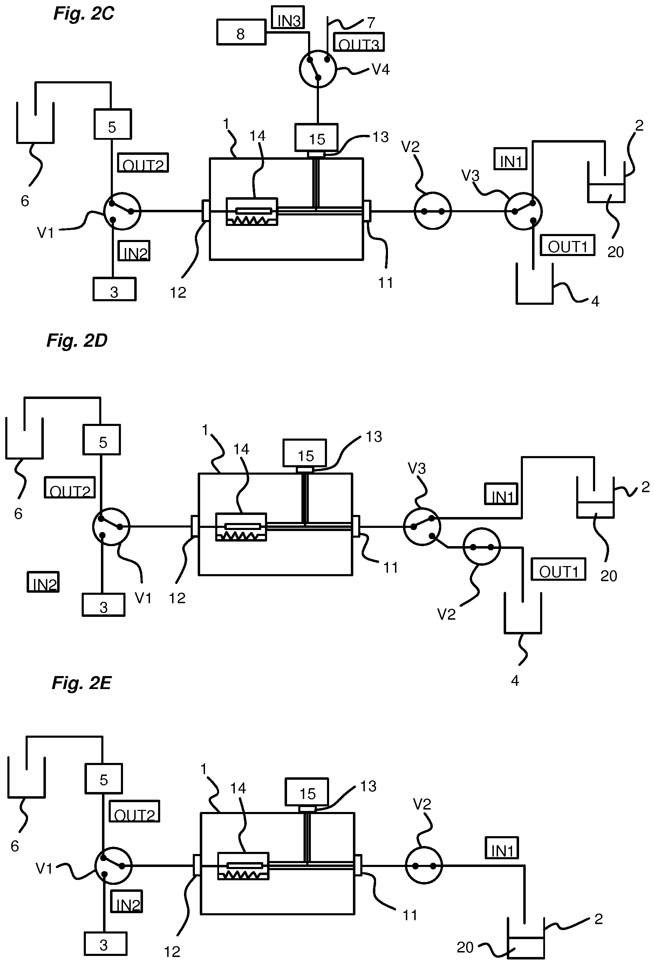

Les figures 2A à 2E représentent ainsi différents exemples de réalisation du système d'analyse de l'invention. Sur ces figures, à titre d'illustration et de manière non limitative, les vannes sont représentées commutées dans une position particulière. Les caractéristiques présentées dans ces différentes variantes de réalisation peuvent bien entendu être combinées entre elles.

### Figure 2A :

- Le premier point de connexion 11 de l'unité d'extraction 1 est relié à la deuxième vanne fluidique V2 à deux voies.
- La deuxième vanne fluidique V2 à deux voies est reliée à la troisième vanne fluidique V3 à trois voies.
- La troisième vanne fluidique V3 à trois voies, est chargée de commuter entre la première entrée fluidique IN1 et la première sortie fluidique OUT1.
- La première entrée fluidique IN1 est connectée sur le réservoir 2 d'échantillon liquide 20 à injecter dans le système.
- La première sortie fluidique OUT1 est connectée sur le premier réservoir 4 de collecte.
- Le deuxième point de connexion 12 est relié à la première vanne fluidique V1.
- La première vanne fluidique V1 est chargée de sélectionner la liaison du deuxième point de connexion 12, entre la deuxième entrée fluidique IN2 et la deuxième sortie fluidique OUT2.
- La deuxième entrée fluidique IN2 est connectée sur la source de gaz 3.
- La deuxième sortie fluidique OUT2 est connectée sur le système de pompage 5.
- Le système de pompage est relié au deuxième réservoir 6 de collecte.
- Le dispositif d'analyse 15 est connecté au troisième point de connexion 13 de l'unité d'extraction 1.

### Figure 2B :

Dans cette réalisation, par rapport à celle de la figure 2A, on a :
   - Le dispositif d'analyse 15 est relié à la quatrième vanne fluidique V4 à deux voies, destinée à contrôler une évacuation d'air en dehors du dispositif d'analyse,
   - La quatrième vanne fluidique V4 est reliée à l'évent 7.

### Figure 2C :

Dans cette réalisation, par rapport à celle de la figure 2B, la quatrième vanne fluidique V4 est une vanne à trois voies, permettant ainsi de connecter le dispositif d'analyse 15, soit avec l'évent 7, soit avec la deuxième source de gaz 8.

### Figure 2D :

Dans cette réalisation, par rapport à celle de la figure 2A, la deuxième vanne fluidique V2 à deux voies et la troisième vanne fluidique V3 à trois voies sont interverties sur le canal principal 160. La troisième vanne fluidique V3 est ainsi directement connectée au premier point de connexion 11 et permet de sélectionner la liaison du premier point de connexion, entre la première entrée fluidique IN1 et la première sortie fluidique OUT1, celle-ci étant alors commandée par la deuxième vanne fluidique V2 à deux voies et reliée au premier réservoir 4 de collecte.

### Figure 2E :

Dans cette réalisation, par rapport à celle de la figure 2A, la troisième vanne fluidique V3 à trois voies est supprimée. Cette réalisation ne comporte donc pas de première sortie fluidique OUT1. La deuxième vanne fluidique V2 à deux voies relie directement le premier point de connexion 11 de l'unité d'extraction à la première entrée fluidique IN1, sur laquelle vient se connecter le réservoir 2 d'échantillon liquide 20. Cette solution peut s'avérer suffisante dans le cas où la totalité de l'échantillon liquide 20 est injectée dans le système. Son réservoir 2 pourra ensuite servir de réservoir de collecte.

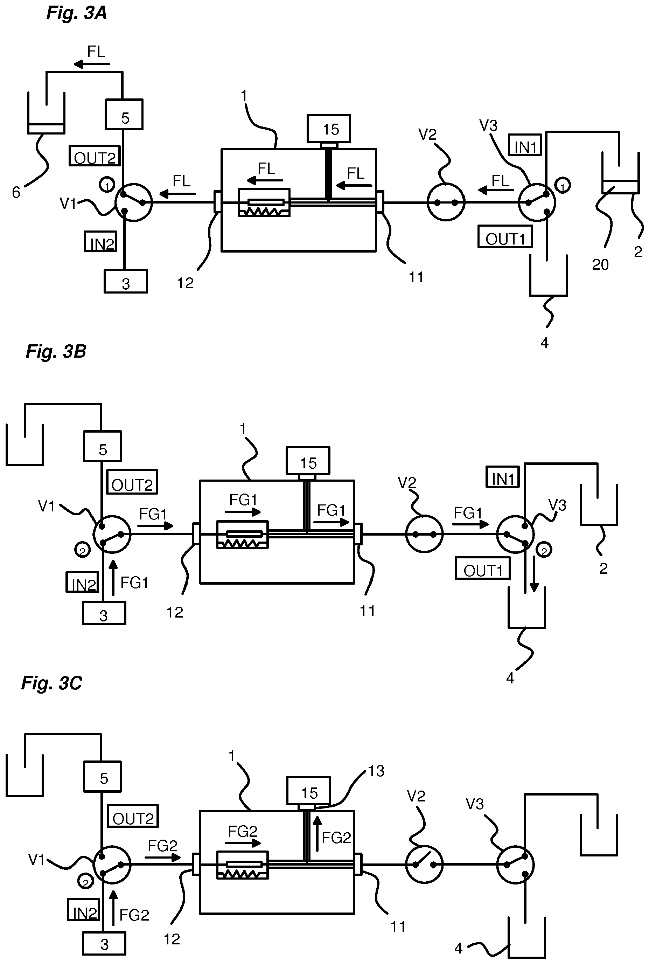

En liaison avec les figures 3A à 3C, de manière non limitative, le système d'analyse (avec la configuration de la figure 2A décrite ci-dessus) fonctionne de la manière suivante :

### Etape 1 - Préconcentration - Figure 3A

La première vanne fluidique V1 est commandée en position 1 pour connecter le système de pompage 5 au deuxième point de connexion 12 de l'unité d'extraction 1.

La deuxième vanne fluidique V2 est ouverte, autorisant le passage d'un flux liquide FL.

La troisième vanne fluidique V3 est commandée en position 1 pour connecter le réservoir 2 d'échantillon liquide 20 au canal principal 160.

L'échantillon liquide 20 à analyser, présent initialement dans son réservoir 2, est aspiré par le système de pompage 5 de manière à entrer dans l'unité d'extraction 1 par le premier point de connexion 11.

Par le canal principal 160, le flux liquide FL pénètre dans le dispositif d'extraction 14.

Les analytes d'intérêt sont adsorbés par les microstructures du dispositif d'extraction 14.

La température du dispositif d'extraction est ajustée pour permettre l'adsorption des analytes d'intérêts, mais peut éventuellement être supérieure ou inférieure à la température ambiante.

L'échantillon liquide est évacué par la deuxième sortie fluidique OUT2 dans le deuxième réservoir 6 de collecte, situé en aval du système de pompage 5.

### Etape 2 - Séchage

La première vanne fluidique V1 est commandée en position 2 pour connecter la source de gaz au deuxième point de connexion de l'unité d'extraction.

La deuxième vanne fluidique V2 est ouverte, autorisant le passage d'un flux gazeux FG1.

La troisième vanne fluidique V3 est commandée en position 2 pour relier le canal principal 160 au réservoir 4 de collecte.

La source de gaz est commandée pour générer un flux de gaz FG1 à travers le dispositif d'extraction 14, permettant ainsi de sécher les analytes capturés dans la zone d'extraction. Le gaz est évacué par la première sortie fluidique OUT1 dans le premier réservoir 4 de collecte. Le flux de gaz FG1 peut être émis à une pression de 1 bar.

Le canal secondaire 161 menant au dispositif d'analyse 15 présente une résistance hydraulique importante par rapport à celle du canal principal 160, permettant de définir le canal principal comme canal prioritaire pour le flux gazeux FG1 et d'éviter au maximum que ce flux gazeux puisse se diriger vers le dispositif d'analyse 15. Comme vu ci-dessus dans la variante de la figure 2C, une contre-pression peut être exercée au niveau du T fluidique pour éviter toute injection de gaz dans le dispositif d'analyse 15.

L'étape de séchage peut durer de quelques secondes à quelques minutes, avantageusement entre 1 min et 15min et avantageusement entre 1min et 5min.

Lors de cette étape la température du dispositif d'extraction peut être ajustée pour faciliter le séchage mais ne pas rendre possible la désorption des analytes d'intérêts.

### Etape 3 - Désorption

Le système de chauffage 140 du dispositif d'extraction est activé, afin de désorber les analytes d'intérêt, formant un flux gazeux FG2. La température de chauffage est comprise entre 150°C et 350°C, avantageusement égale à environ 250°C.

Le système de chauffage 17 est également activé pour chauffer également le canal principal 160, le canal secondaire 161 et éventuellement le dispositif d'analyse et maintenir tout le réseau fluidique de l'unité d'extraction à une température homogène donnée, évitant ainsi la création de points froids.

La première vanne fluidique V1 est commandée en position 2 pour générer un flux de gaz vecteur permettant de pousser le flux gazeux FG2 généré au niveau du dispositif d'extraction vers le dispositif d'analyse 15, via le canal secondaire 161.

La deuxième vanne fluidique V2 est fermée afin de maintenir le flux gazeux FG2 généré dans l'unité d'extraction 1.

Ce flux gazeux FG2 peut être émis à une pression de 0,3 bar.

Lors de la phase de désorption, les paramètres (température et durée) seront choisis de manière à obtenir une désorption complète des analytes pour éviter toute contamination pour l'analyse suivante.

On comprend ainsi que la solution de l'invention présente de nombreux avantages, parmi lesquels :
- Elle permet de toujours éviter que les gaz chargés d'analytes ne passent à travers les vannes fluidiques commandés, aucune vanne n'étant présente sur le réseau fluidique présent entre le dispositif d'extraction 14 et le dispositif d'analyse 15 ;
- Elle permet d'éviter les points froids dans l'unité d'extraction 1, aucune vanne n'étant présente entre le dispositif d'extraction 14 et le dispositif d'analyse 15, c'est-à-dire ni sur le canal principal 160, ni sur le canal secondaire 161 ;
- Le même canal principal 160 est utilisé à la fois pour le passage du flux liquide FL comprenant l'échantillon liquide dans un sens, via le premier point de connexion 11 et pour le passage de chaque flux gazeux FG1, FG2 dans l'autre sens ;
- L'utilisation d'un seul canal principal 160 dans l'unité d'extraction pour faire passer le flux liquide FL, puis chaque flux gazeux FG1, FG2, permet de réaliser une préconcentration avec un écoulement continu du liquide à travers le dispositif d'extraction 14 ;
- Elle permet d'obtenir un gain sur la consommation électrique (pas de vanne à chauffer) ;
- Elle permet d'avoir un gain sur le cycle d'analyse ("throughput") avec un gain sur l'inertie thermique des éléments à chauffer ;
De manière non limitative, le système d'analyse peut être adapté pour analyser des liquides comme le vin, l'eau, les carburants et notamment toute solution aqueuse comprenant des composés organiques tels que par exemple les BTEX (benzène, toluène, éthylbenzène, xylène) ou les HAPs (Hydrocarbones Aromatiques Polycycliques).

## Revendications

1. Unité d'extraction employée dans un système d'analyse (1) d'un échantillon liquide (20), comprenant :
- Un dispositif d'extraction (14) comprenant au moins une zone d'extraction d'au moins un analyte contenu dans ledit échantillon liquide et un dispositif d'analyse en phase gazeuse desdits analytes;
- Ladite unité d'extraction comportant trois points de connexion, dits premier point de connexion (11), deuxième point de connexion (12) et troisième point de connexion (13), tels que :
- Ledit premier point de connexion (11) est agencé pour être relié à une première entrée fluidique destinée à recevoir un flux liquide entrant provenant de l'échantillon liquide (20),
- Ledit deuxième point de connexion (12) est agencé pour être relié à une deuxième entrée fluidique destinée à être connectée à une première source de gaz (3) à injecter pour injecter un flux de gaz entrant (FG1, FG2),
- Ledit troisième point de connexion (13) est agencé pour être relié à un dispositif d'analyse (15);
- Ladite unité d'extraction étant **caractérisé en ce qu'**elle comporte un canal principal (160) reliant ledit premier point de connexion (11) audit deuxième point de connexion (12) à travers ledit dispositif d'extraction (14), un canal secondaire (161) connecté au canal principal (160) pour relier directement le troisième point de connexion audit premier point de connexion et audit dispositif d'extraction, et un T fluidique destiné à réaliser la jonction du canal secondaire (161) sur le canal principal (160), et **en ce que**
- Ledit canal secondaire (161) présente une résistance hydraulique supérieure à celle du canal principal (160).

2. Unité d'extraction selon la revendication 1, **caractérisée en ce qu'**elle comporte un système de chauffage (17) agencé pour chauffer ledit canal principal et ledit canal secondaire.

3. Système d'analyse comprenant :
- Une première entrée fluidique (IN1) destinée à recevoir un échantillon liquide à analyser ;
- Des moyens d'injection dudit échantillon liquide (20) ;
- Une deuxième entrée fluidique (IN2) destinée à recevoir un gaz ;
- Un dispositif d'analyse (15) ;
- Des premiers moyens de commutation fluidique agencés sur ladite première entrée fluidique (IN1) et des deuxièmes moyens de commutation fluidique agencés sur ladite deuxième entrée fluidique (IN2) ;
- **Caractérisé en ce qu'**il comporte :
- Une unité d'extraction telle que définie dans l'une des revendications 1 ou 2, dont ledit premier point de connexion (11) est relié à ladite première entrée fluidique (IN1) via lesdites premiers moyens de commutation fluidique, ledit deuxième point de connexion (12) est relié à ladite deuxième entrée fluidique (IN2) via lesdits deuxièmes moyens de commutation fluidique et ledit troisième point de connexion (13) est relié directement audit dispositif d'analyse (15).

4. Système selon la revendication 3, **caractérisé en ce que** les premiers moyens de commutation fluidique comportent une première vanne fluidique (V2) à deux voies, agencée entre ledit premier point de connexion (11) de l'unité d'extraction et ladite première entrée fluidique (IN1).

5. Système selon la revendication 3 ou 4, **caractérisé en ce qu'**il comporte une sortie fluidique, dite première sortie fluidique (OUT1), agencée en parallèle de la première entrée fluidique (IN1) et **en ce que** lesdits premiers moyens de commutation fluidique comportent une deuxième vanne fluidique (V3) à trois voies, agencée pour sélectionner la liaison du premier point de connexion (11) de l'unité d'extraction, soit avec ladite première entrée fluidique (IN1), soit avec ladite première sortie fluidique (OUT1).

6. Système selon la revendication 5, **caractérisé en ce qu'**il comporte un réservoir (2) connecté sur ladite première entrée fluidique (IN1) et destiné à recevoir l'échantillon liquide (20) à analyser.

7. Système selon la revendication 5, **caractérisé en ce qu'**il comporte un réservoir (4) de collecte, connecté sur ladite première sortie fluidique (OUT1).

8. Système selon l'une des revendications 3 à 7, **caractérisé en ce qu'**il comporte une sortie fluidique, dite deuxième sortie fluidique (OUT2), agencée en parallèle de la deuxième entrée fluidique (IN2) et **en ce que** lesdits deuxièmes moyens de commutation fluidique comportent une vanne fluidique (V1) à trois voies, agencée pour sélectionner la liaison du deuxième point de connexion (12) de l'unité d'extraction soit avec ladite deuxième entrée fluidique (IN2), soit avec ladite deuxième sortie fluidique (OUT2).

9. Système selon la revendication 8, **caractérisé en ce qu'**il comporte un système de pompage (5) connecté sur ladite deuxième sortie fluidique (OUT2).

10. Système selon la revendication 8 ou 9, **caractérisé en ce qu'**il comporte une source de gaz (3) connectée sur ladite deuxième entrée fluidique (IN2).

11. Système selon l'une des revendications 3 à 10, **caractérisé en ce que** le système comporte une troisième entrée fluidique (IN3) connectée audit dispositif d'analyse (15).

12. Système selon la revendication 11, **caractérisé en ce qu'**il comporte un évent (7) et des troisièmes moyens de commutation fluidique agencés pour relier ledit dispositif d'analyse (15) audit évent (7) ou à ladite troisième entrée fluidique (IN3).

13. Procédé d'analyse d'un échantillon liquide, mis en œuvre à l'aide du système tel que défini dans l'une des revendications 3 à 12, **caractérisé en ce qu'**il comporte les étapes suivantes :
- Injection de l'échantillon fluidique (20) par la première entrée fluidique (IN1) de manière à créer un flux liquide (FL) à travers ledit premier point de connexion (11), via le canal principal jusqu'à ladite zone d'extraction,
- Injection d'un gaz par ladite deuxième entrée fluidique (IN2) pour créer un flux gazeux (FG1) à travers ledit deuxième point de connexion (12), via ledit canal principal (160) jusqu'à la ladite zone d'extraction,
- Chauffage de ladite zone d'extraction pour désorber des analytes présents dans la zone d'extraction,
- Injection d'un gaz par ladite deuxième entrée fluidique (IN2) pour créer un deuxième flux gazeux (FG2) porteur à travers ledit deuxième point de connexion (12) et amener lesdits analytes désorbés vers le dispositif d'analyse (15) à travers le canal principal (160) et le canal secondaire (161).

## Patentansprüche

1. Extraktionseinheit, die in einem System (1) zum Analysieren einer Flüssigkeitsprobe (20) verwendet wird und Folgendes umfasst:
- eine Extraktionsvorrichtung (14), die wenigstens eine Zone zum Extrahieren wenigstens eines Analyten, der in der Flüssigkeitsprobe enthalten ist, und eine Vorrichtung zum Analysieren der Analyten in der Gasphase enthält;
- wobei die Extraktionseinheit drei Verbindungspunkte, nämlich einen ersten Verbindungspunkt (11), einen zweiten Verbindungspunkt (12) und einen dritten Verbindungspunkt (13), umfasst, derart, dass:
- der erste Verbindungspunkt (11) dafür ausgelegt ist, mit einem ersten Fluideingang verbunden zu werden, der dazu bestimmt ist, einen von der Flüssigkeitsprobe (20) stammenden Eingangsflüssigkeitsstrom zu empfangen,
- der zweite Verbindungspunkt (12) dafür ausgelegt ist, mit einem zweiten Fluideingang verbunden zu werden, der dazu bestimmt ist, mit einer ersten Quelle (3) für einzuleitendes Gas verbunden zu werden, um einen Eingangsgasstrom (FG1, FG2) einzuleiten,
- der dritte Verbindungspunkt (13) dafür ausgelegt ist, mit einer Analysevorrichtung (15) verbunden zu werden;
- wobei die Extraktionseinheit **dadurch gekennzeichnet ist, dass** sie einen Hauptkanal (160), der den ersten Verbindungspunkt (11) mit dem zweiten Verbindungspunkt (12) über die Extraktionsvorrichtung (14) verbindet, einen Nebenkanal (161), der mit dem Hauptkanal (160) verbunden ist, um den dritten Verbindungspunkt direkt mit dem ersten Verbindungspunkt und mit der Extraktionsvorrichtung zu verbinden, und ein fluidtechnisches T-Stück, das dazu bestimmt ist, die Abzweigung des Nebenkanals (161) an dem Hauptkanal (160) zu verwirklichen, umfasst und dass
- der Nebenkanal (161) einen hydraulischen Widerstand aufweist, der höher als jener des Hauptkanals (160) ist.

2. Extraktionseinheit nach Anspruch 1, **dadurch gekennzeichnet, dass** sie ein Heizsystem (17) umfasst, das dafür ausgelegt ist, den Hauptkanal und den Nebenkanal zu heizen.

3. Analysesystem, das Folgendes umfasst:
- einen ersten Fluideingang (IN1), der dazu bestimmt ist, eine zu analysierende Flüssigkeitsprobe zu empfangen;
- Mittel zum Einleiten der Flüssigkeitsprobe (20);
- einen zweiten Fluideingang (IN2), der dazu bestimmt ist, ein Gas zu empfangen;
- eine Analysevorrichtung (15);
- erste Fluidkommutationsmittel, die an dem ersten Fluideingang (IN1) angeordnet sind, und zweite Fluidkommutationsmittel, die an dem zweiten Fluideingang (IN2) angeordnet sind;
**gekennzeichnet durch**:
- eine Extraktionseinheit nach einem der Ansprüche 1 oder 2, wovon der erste Verbindungspunkt (11) mit dem ersten Fluideingang (IN1) über die ersten Fluidkommutationsmittel verbunden ist, der zweite Verbindungspunkt (12) mit dem zweiten Fluideingang (IN2) über die zweiten Fluidkommutationsmittel verbunden ist und der dritte Verbindungspunkt (13) direkt mit der Analysevorrichtung (15) verbunden ist.

4. System nach Anspruch 3, **dadurch gekennzeichnet, dass** die ersten Fliudkommutationsmittel ein erstes Zweiwege-Fluidventil (V2) enthalten, das zwischen dem ersten Verbindungspunkt (11) der Extraktionseinheit und dem ersten Fluideingang (IN1) angeordnet ist.

5. System nach Anspruch 3 oder 4, **dadurch gekennzeichnet, dass** es einen Fluidausgang, der erster Fluidausgang (OUT1) genannt wird und parallel zu dem ersten Fluideingang (IN1) angeordnet ist, umfasst und dass die ersten Fluidkommutationsmittel ein zweites Dreiwege-Fluidventil (V3) umfassen, das dafür ausgelegt ist, die Verbindung von dem ersten Verbindungspunkt (11) der Extraktionseinheit entweder mit dem ersten Fluideingang (IN1) oder mit dem ersten Fluidausgang (OUT1) zu wählen.

6. System nach Anspruch 5, **dadurch gekennzeichnet, dass** es einen Vorratsbehälter (2) umfasst, der mit dem ersten Fluideingang (IN1) verbunden ist und dazu bestimmt ist, die zu analysierende Flüssigkeitsprobe (20) zu empfangen.

7. System nach Anspruch 5, **dadurch gekennzeichnet, dass** es einen Sammelvorratsbehälter (4) umfasst, der mit dem ersten Fluidausgang (OUT1) verbunden ist.

8. System nach einem der Ansprüche 3 bis 7, **dadurch gekennzeichnet, dass** es einen Fluidausgang, der zweiter Fluidausgang (OUT2) genannt wird und parallel zu dem zweiten Fluideingang (IN2) angeordnet ist, umfasst und dass die zweiten Fluidkommutationsmittel ein Dreiwege-Fluidventil (V1) umfassen, das dafür ausgelegt ist, die Verbindung von dem zweiten Verbindungspunkt (12) der Extraktionseinheit entweder mit dem zweiten Fluideingang (IN2) oder mit dem zweiten Fluidausgang (OUT2) zu wählen.

9. System nach Anspruch 8, **dadurch gekennzeichnet, dass** es ein Pumpsystem (5) umfasst, das mit dem zweiten Fluidausgang (OUT2) verbunden ist.

10. System nach Anspruch 8 oder 9, **dadurch gekennzeichnet, dass** es eine Gasquelle (3) umfasst, die mit dem zweiten Fluideingang (IN2) verbunden ist.

11. System nach einem der Ansprüche 3 bis 10, **dadurch gekennzeichnet, dass** das System einen dritten Fluideingang (IN3) umfasst, der mit der Analysevorrichtung (15) verbunden ist.

12. System nach Anspruch 11, **dadurch gekennzeichnet, dass** es einen Schacht (7) und dritte Fluidkommutationsmittel, die dafür ausgelegt sind, die Analysevorrichtung (15) mit dem Schacht (7) oder mit dem dritten Fluideingang (IN3) zu verbinden, umfasst.

13. Verfahren zum Analysieren einer Flüssigkeitsprobe, das mit Hilfe des Systems nach einem der Ansprüche 3 bis 12 ausgeführt wird, **dadurch gekennzeichnet, dass** es die folgenden Schritte umfasst:
- Einleiten der Fluidprobe (20) durch den ersten Fluideingang (IN1) in der Weise, dass ein Flüssigkeitsstrom (FL) durch den ersten Verbindungspunkt (11) über den Hauptkanal bis zu der Extraktionszone geschaffen wird,
- Einleiten eines Gases durch den zweiten Fluideingang (IN2), um einen gasförmigen Strom (FG1) durch den zweiten Verbindungspunkt (12) über den Hauptkanal (160) bis zu der Extraktionszone zu schaffen,
- Heizen der Extraktionszone, um in der Extraktionszone vorhandene Analyten zu desorbieren,
- Einleiten eines Gases durch den zweiten Fluideingang (IN2), um einen zweiten gasförmigen Trägerstrom (FG2) durch den zweiten Verbindungspunkt (12) zu schaffen und die desorbierten Analyten zu der Analysevorrichtung (15) durch den Hauptkanal (160) und durch den Nebenkanal (161) zu führen.

## Claims

1. Extraction unit employed in a system for the analysis (1) of a liquid sample (20), comprising:
- an extraction device (14) comprising at least one zone for extraction of at least one analyte contained in the said liquid sample and a device for the gas-analysis of the said analytes;
- the said extraction unit comprising three connection points, referred to as first connection point (11), second connection point (12) and third connection point (13), such that:
- the said first connection point (11) is arranged in order to be joined to a first fluid inlet intended to receive an incoming liquid stream originating from the liquid sample (20),
- the said second connection point (12) is arranged in order to be joined to a second fluid inlet intended to be connected to a first sort of gas (3) to be injected in order to inject an incoming gas stream (FG1, FG2),
- the said third connection point (13) is arranged in order to be joined to an analysis device (15);
- the said extraction unit being **characterized in that** it comprises a main channel (160) joining the said first connection point (11) to the said second connection point (12) through the said extraction device (14), a secondary channel (161) connected to the main channel (160) in order to directly join the third connection point to the said first connection point and to the said extraction device, and a fluid T-shaped section intended to bring about the joining of the secondary channel (161) to the main channel (160), and **in that**
- the said secondary channel (161) exhibits a greater hydraulic resistance than that of the main channel (160).

2. Extraction unit according to Claim 1, **characterized in that** it comprises a heating system (17) arranged in order to heat the said main channel and the said secondary channel.

3. Analytical system comprising:
- a first fluid inlet (IN1) intended to receive a liquid sample to be analysed;
- means for injection of the said liquid sample (20);
- a second fluid inlet (IN2) intended to receive a gas;
- an analytical device (15);
- first fluid switching means arranged on the said first fluid inlet (IN1) and second fluid switching means arranged on the said second fluid inlet (IN2);
- **characterized in that** it comprises:
- an extraction unit as defined in either of Claims 1 and 2, the said first connection point (11) of which is joined to the said first fluid inlet (IN1) via the said first fluid switching means, the said second connection point (12) of which is joined to the said second fluid inlet (IN2) via the said second fluid switching means and the said third connection point (13) of which is directly joined to the said analytical device (15).

4. System according to Claim 3, **characterized in that** the first fluid switching means comprise a first two-way fluid valve (V2), arranged between the said first connection point (11) of the extraction unit and the said first fluid inlet (IN1).

5. System according to Claim 3 or 4, **characterized in that** it comprises a fluid outlet, said first fluid outlet (OUT1), arranged in parallel with a first fluid inlet (IN1) and **in that** the said first fluid switching means comprise a second three-way fluid valve (V3), arranged in order to select the linking of the first connection point (11) of the extraction unit either with the said first fluid inlet (IN1) or with the said first fluid outlet (OUT1).

6. System according to Claim 5, **characterized in that** it comprises a tank (2) connected to the said first fluid inlet (IN1) and intended to receive the liquid sample (20) to be analysed.

7. System according to Claim 5, **characterized in that** it comprises a collecting tank (4), connected to the said first fluid outlet (OUT1).

8. System according to one of Claims 3 to 7, **characterized in that** it comprises a fluid outlet, said second fluid outlet (OUT2), arranged in parallel with the second fluid inlet (IN2) and **in that** the said second fluid switching means comprise a three-way fluid valve (V1), arranged in order to select the linking of the second connection pint (12) of the extraction units either with the said second fluid inlet (IN2) or with the said second fluid outlet (OUT2).

9. System according to Claim 8, **characterized in that** it comprises a pumping system (5) connected to the said second fluid outlet (OUT2).

10. System according to Claim 8 or 9, **characterized in that** it comprises a gas source (3) connected to the said second fluid inlet (IN2).

11. System according to one of Claims 3 to 10, **characterized in that** the system comprises a third fluid inlet (IN3) connected to the said analytical device (15).

12. System according to Claim 11, **characterized in that** it comprises a vent (7) and third fluid switching means arranged in order to join the said analytical device (15) to the said vent (7) or to the said third fluid inlet (IN3).

13. Method for the analysis of a liquid sample, carried out using the system as defined in one of Claims 3 to 12, **characterized in that** it comprises the following stages:
- injection of the fluid sample (20) by the first fluid inlet (IN1), so as to create a liquid stream (FL) through the said first connection point (11), via the main channel up to the said extraction zone,
- injection of a gas by the said second fluid inlet (IN2) in order to create a gas stream (FG1) to the said second connection point (12), via the said main channel (160) up to the said extraction zone,
- heating of the said extraction zone in order to desorb analytes present in the extraction zone,
- injection of a gas by the said second fluid inlet (IN2) in order to create a second carrier gas stream (FG2) through the said second connection point (12) and to convey the said desorbed analytes towards the analytical device (15) to the main channel (160) and the secondary channel (161).
